# FASCICULE DE BREVET EUROPEEN

(11) **EP 4 122 830 B1**
(45) Date de publication et mention de la délivrance du brevet: **01.05.2024**
(21) Numéro de dépôt: 22185448.2
(22) Date de dépôt: 18.07.2022
(51) Int. Cl.: B64D 27/24, B64D 35/08, B64D 27/02

(54) **SYSTEME DE PROPULSION A HÉLICE POUR AERONEF**
PROPELLERANTRIEBSSYSTEM FÜR LUFTFAHRZEUG
PROPULSION SYSTEM WITH PROPELLER FOR AIRCRAFT

(30) Priorité: 19.07.2021 FR 2107763
(43) Date de publication de la demande: 25.01.2023
(73) Titulaire: Airbus Operations SAS, 31060 Toulouse (FR); Airbus SAS, 31700 Blagnac (FR); Airbus Operations S.L., 28906 Getafe Madrid (ES)
(72) Inventeur: ALLIAS, Jean-François, 31060 TOULOUSE (FR); ALVAREZ, Franck, 31060 TOULOUSE (FR); POME, Pascal, 31060 TOULOUSE (FR); JOLIVET, Nicolas, 31060 TOULOUSE (FR); AMARGIER, Rémi, 31060 TOULOUSE (FR); DEMELAS, Salvatore, 28906 GETAFE MADRID (ES); SIMIONATO NETO, Norberto, 82024 TAUFKIRCHEN (DE); BAMMER, Benedikt, 82024 TAUFKIRCHEN (DE); MARIOTTO, Damien, 13700 MARIGNANE (FR)
(74) Mandataire: Cabinet Le Guen Maillet

(56) Documents cités:
- EP-A1- 3 738 887
- EP-A2- 2 727 834
- WO-A1-2017/114643
- DE-A- 3 629 867
- US-A1- 2010 021 295
- US-A1- 2012 214 642
- US-A1- 2017 190 435
- US-A1- 2021 039 796
- US-A1- 2021 094 694
- US-B2- 10 364 037

## Description

### DOMAINE TECHNIQUE

La présente invention concerne un système de propulsion à hélice pour aéronef qui comporte une pluralité de moteurs électriques entraînant conjointement l'hélice en rotation.

### ETAT DE LA TECHNIQUE ANTERIEURE

Des moteurs électriques peuvent être utilisés pour entraîner en rotation une hélice de système de propulsion et ainsi déplacer un aéronef tant au sol qu'en vol. US2017/190435 A1 divulgue un système de propulsion à hélice pour aéronef comportant une hélice et une pluralité de moteurs électriques.

Les aéronefs commerciaux étant des engins relativement lourds, une grande énergie de propulsion est nécessaire pour les déplacer. Les aéronefs disposent alors typiquement de plusieurs systèmes de propulsion, c'est-à-dire plusieurs moteurs à hélice. Malgré cela, chaque système de propulsion doit typiquement disposer de plusieurs moteurs électriques qui agissent conjointement pour entraîner l'hélice en rotation.

A cet effet, une boîte à engrenages est utilisée. Chaque moteur électrique comportant un arbre de sortie (arbre moteur), la boîte à engrenages assure l'accouplement mécanique entre les arbres de sortie de ces moteurs électriques et un arbre de sortie de la boîte à engrenages qui est solidaire de l'hélice. La boîte à engrenages comporte ainsi autant d'arbres d'entrée que de moteurs électriques mis en parallèle. Un inconvénient de cet agencement est que, les moteurs étant montés en parallèle, l'encombrement du système de propulsion est important dans le sens de la hauteur et de la largeur. Dit autrement, le diamètre du système de propulsion selon un plan perpendiculaire à l'axe de rotation de l'hélice est élevé. Cela nuit à l'aérodynamisme de l'aéronef et en accroît donc la consommation en carburant (e.g., hydrogène).

Il est alors souhaitable de fournir une solution qui permette d'améliorer l'aérodynamisme et la consommation de carburant de l'aéronef.

### EXPOSE DE L'INVENTION

Il est alors proposé un système de propulsion à hélice pour aéronef comportant : une hélice ; une pluralité de moteurs électriques ; une boîte à engrenages ayant un arbre de sortie sur lequel est mécaniquement couplée l'hélice et ayant un arbre d'entrée sur lequel est mécaniquement couplée la pluralité de moteurs électriques, l'arbre d'entrée étant excentré par rapport à l'arbre de sortie. De plus, tous les moteurs électriques de la pluralité de moteurs électriques sont couplés mécaniquement à la suite les uns des autres le long de l'arbre d'entrée de telle façon que les moteurs électriques sont au moins partiellement intégrés dans un espace, de l'autre côté de la boîte à engrenages par rapport à l'hélice, laissé libre par l'excentrage entre l'arbre d'entrée et l'arbre de sortie. Ainsi, les moteurs électriques ne sont pas montés en parallèle, et le diamètre du système de propulsion selon un plan perpendiculaire à l'axe de rotation de l'hélice est réduit. L'aérodynamisme et la consommation de carburant de l'aéronef en sont améliorés.

Selon un mode de réalisation particulier, chaque moteur électrique comporte un arbre de sortie parallèle audit arbre d'entrée et comportant un premier engrenage couplé mécaniquement à un deuxième engrenage sur ledit arbre d'entrée, le premier engrenage et le deuxième engrenage étant dans un même plan.

Selon un mode de réalisation particulier, chaque moteur électrique comporte un arbre de sortie perpendiculaire audit arbre d'entrée et comportant un premier engrenage conique couplé mécaniquement à un deuxième engrenage conique sur ledit arbre d'entrée, le premier engrenage conique et le deuxième engrenage conique étant ainsi dans des plans respectifs perpendiculaires.

Selon un mode de réalisation particulier, les moteurs électriques sont disposés en ligne.

Selon un mode de réalisation particulier, les moteurs électriques sont disposés de part et d'autre d'un plan vertical passant par l'axe de rotation de l'arbre d'entrée.

Selon un mode de réalisation particulier, les moteurs électriques sont couplés mécaniquement en roue libre avec l'arbre d'entrée.

Selon un mode de réalisation particulier, l'arbre d'entrée est couplé mécaniquement en roue libre avec l'arbre de sortie.

Selon un mode de réalisation particulier, le système de propulsion à hélice comporte en outre un boîtier de contrôle d'orientation des pales de l'hélice placé dans la continuité de l'arbre de sortie, de l'autre côté de la boîte à engrenages par rapport à l'hélice.

Selon un mode de réalisation particulier, les moteurs électriques sont alimentés par des piles à combustible.

Il est aussi proposé un aéronef comportant au moins un système de propulsion à hélice tel qu'évoqué ci-dessus dans l'un quelconque de ses modes de réalisation.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
La Fig. 1 illustre schématiquement, en perspective, un aéronef équipé d'au moins un système de propulsion à hélice ;
La Fig. 2 illustre schématiquement, en vue en coupe simplifiée, un agencement d'un tel système de propulsion à hélice ;
La Fig. 3 illustre schématiquement, en vue en coupe simplifiée, un autre agencement d'un tel système de propulsion à hélice ; et
La Fig. 4 illustre schématiquement, en perspective, un mode de réalisation particulier de l'agencement de la Fig. 3.

### EXPOSE DETAILLE DE MODES DE REALISATION

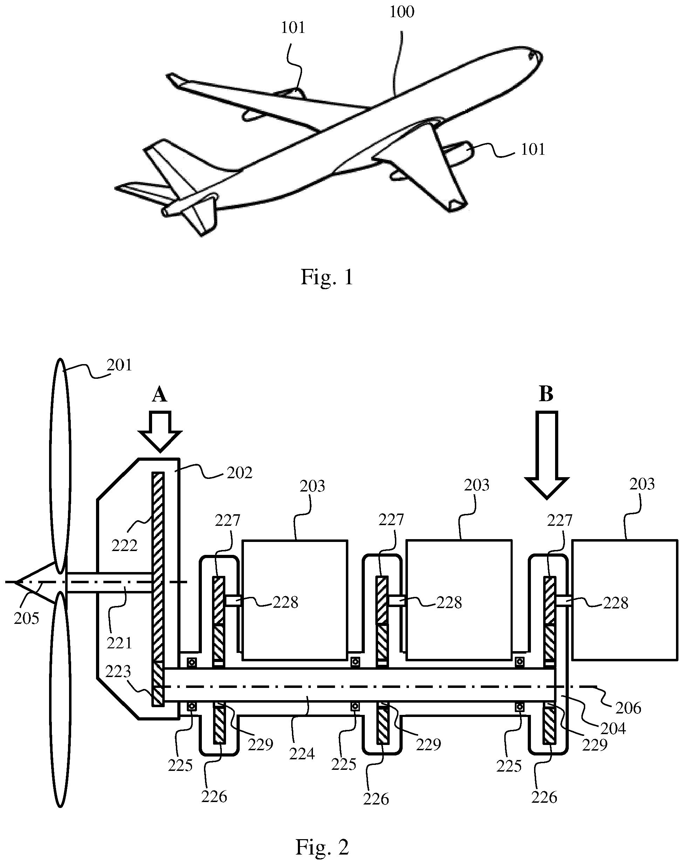

La Fig. 1 illustre schématiquement, en perspective, un aéronef 100 équipé d'au moins un système de propulsion à hélice 101. De manière illustrative, l'aéronef 100 de la Fig. 1 comporte deux systèmes de propulsion à hélice 101 montés respectivement sur chacune des ailes de l'aéronef 100. L'aéronef 100 peut comporter un nombre différent de systèmes de propulsion à hélice 101.

Le terme « longueur » utilisé ici réfère à une dimension horizontale lorsque l'aéronef 100 est au sol, et le terme « hauteur » utilisé ici réfère à une dimension verticale lorsque l'aéronef 100 est au sol.

La Fig. 2 illustre schématiquement, en vue en coupe simplifiée, un agencement d'un tel système de propulsion à hélice 101.

Le système de propulsion à hélice 101 comporte une hélice 201 ainsi qu'une boîte à engrenages (« gearbox » en anglais) 202. L'hélice peut être une hélice de turbopropulseur comme schématiquement représenté sur la Fig. 2. Toutefois, d'autres configurations d'hélice peuvent être envisagées sans sortir du cadre de l'invention. Ainsi, l'hélice peut par exemple correspondre à une hélice carénée (« ducted fan » en anglais). La boîte à engrenages 202 comporte un arbre de sortie 221 auquel est mécaniquement couplée l'hélice 201. Comme illustré sur la Fig. 2, l'hélice 201 est typiquement montée au bout de l'arbre de sortie 221 de sorte que son axe de rotation est l'axe de révolution 205 de l'arbre de sortie 221.

Le système de propulsion à hélice 101 comporte une pluralité de moteurs électriques 203 dédiés à la mise en rotation de l'hélice 201 via la boîte à engrenages 202. Par exemple, chaque moteur électrique 203 est alimenté par une ou plusieurs piles à combustible, telles que des piles à hydrogène.

Chaque moteur électrique 203 comporte un arbre de sortie 228 couplé mécaniquement avec un arbre commun d'entrée 224 de la boîte à engrenages 202. Ainsi, la pluralité de moteurs électriques 203 est couplée mécaniquement à un même arbre et les moteurs électriques 203 entraînent donc de manière conjointe l'arbre commun d'entrée 224.

L'arbre commun d'entrée 224 est parallèle à l'arbre de sortie 221 et est excentré par rapport à l'arbre de sortie 221. L'arbre commun d'entrée 224 pénètre dans la boîte à engrenages 202 du côté opposé à celui duquel émerge l'arbre de sortie 221. La boîte à engrenages 202 comporte un ensemble d'engrenages 222, 223 agencés de sorte à assurer une fonction de réduction de vitesse de rotation et à réaliser l' excentrage entre l'arbre commun d'entrée 224 et l'arbre de sortie 221.

Tous les moteurs électriques 203 de la pluralité de moteurs électriques 203 sont installés, au moins partiellement, dans un espace derrière la boîte à engrenages 202 (c'est-à-dire de l'autre côté de la boîte à engrenages 202 par rapport à l'hélice 201) laissé libre par l'excentrage entre l'arbre commun d'entrée 224 et l'arbre de sortie 221. Ainsi, la pluralité de moteurs électriques 203 est logée au moins partiellement dans cet espace laissé libre par l'excentrage entre l'arbre commun d'entrée 224 et l'arbre de sortie 221. Lesdits moteurs électriques 203 sont mécaniquement couplés à l'arbre commun d'entrée 224 à la suite les uns des autres le long de l'arbre commun d'entrée 224. En procédant ainsi, l'encombrement en hauteur du système de propulsion à hélice 101 est réduit, ce qui améliore l'aérodynamisme de l'aéronef 100. Dans un mode de réalisation particulier, tous les moteurs électriques 203 de la pluralité de moteurs électriques 203 sont intégralement installés dans ledit espace derrière la boîte à engrenages 202.

Dans l'agencement de la Fig. 2, les moteurs électriques 203 sont disposés de sorte que leurs arbres de sortie 228 sont parallèles à l'arbre commun d'entrée 224. Chaque arbre de sortie 228 comporte un engrenage 227 mécaniquement couplé à un engrenage 226 sur l'arbre commun d'entrée 224, les engrenages 226 et 227 étant dans un même plan.

Les moteurs électriques 203 sont préférentiellement couplés mécaniquement en roue libre avec l'arbre commun d'entrée 224. Par exemple, un agencement de roue libre (en prise dans un seul sens de rotation, « freewheel » en anglais) 229 est réalisé sur l'assemblage de chaque engrenage 226 sur l'arbre commun d'entrée 224. Selon un autre exemple, un agencement de roue libre est réalisé sur l'assemblage de chaque engrenage 227 sur l'arbre de sortie 228 de chaque moteur électrique 203.

Préférentiellement, l'arbre commun d'entrée 224 est couplé mécaniquement en roue libre avec l'arbre de sortie 221. Par exemple, un agencement de roue libre est réalisé sur l'assemblage de l'arbre commun d'entrée 224 avec l'engrenage 223.

Dans un mode de réalisation, l'arbre commun d'entrée 224 et les ensembles d'engrenages 226, 227 sont agencés dans un même carter (« housing » en anglais) 204, fixe par rapport à la boîte à engrenages 202. La rotation de l'arbre commun d'entrée 224 dans le carter 204 est par exemple assurée par des roulements à billes 225. Cela simplifie la lubrification de ces différents éléments.

Un trajet de chargement (« loading path » en anglais) peut ainsi être assuré avec un premier point d'ancrage sur la boîte à engrenages 202 et un second point d'ancrage sur une partie du carter 204 éloignée de la boîte à engrenages 202, par exemple une partie du carter 204 qui englobe l'accouplement mécanique du tout dernier moteur électrique 203 (par rapport à la boîte à engrenages 202) avec l'arbre commun d'entrée 224, c'est-à-dire les engrenages 226, 227 de ce tout dernier moteur électrique 203. Dit autrement, le trajet de chargement peut être assuré avec un premier point d'ancrage sur la boîte à engrenages 202 et un second point d'ancrage sur une partie du carter 204 située entre les deux moteurs électriques les plus éloignés de la boîte à engrenages 202, comme illustré par les flèches A et B sur la Fig. 2. Cela limite le porte-à-faux.

Le système de propulsion à hélice 101 est préférentiellement autonome afin d'en simplifier l'installation et la maintenance, comme décrit dans le document de brevet FR3097202A1 ou le document de brevet US 2021/0078719 A1.

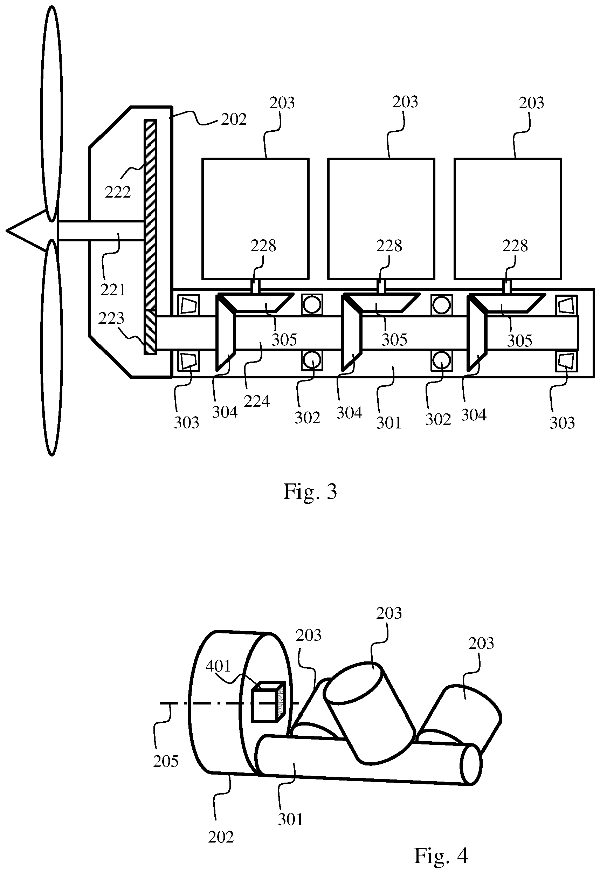

La Fig. 3 illustre schématiquement, en vue en coupe simplifiée, un agencement alternatif du système de propulsion à hélice 101.

Les moteurs électriques 203 sont placés de telle sorte que leurs arbres de sortie 228 sont perpendiculaires à l'arbre commun d'entrée 224. Chaque arbre de sortie 228 comporte un engrenage conique 305 mécaniquement couplé à un engrenage conique 304 sur l'arbre commun d'entrée 224, les engrenages coniques 304 et 305 étant ainsi dans des plans perpendiculaires.

Dans un mode de réalisation, l'arbre commun d'entrée 224 et les ensembles d'engrenages 304, 305 sont agencés dans un même carter 301.

De plus, des roulements à rouleaux coniques 303 peuvent être utilisés en complément de roulements à billes 302 afin de supporter des charges axiales et radiales et assurer la rotation de l'arbre commun d'entrée 224 dans le carter 301.

Comme dans l'agencement de la Fig. 2, le trajet de chargement peut être assuré avec un premier point d'ancrage sur la boîte à engrenages 202 et un second point d'ancrage sur une partie du carter 204 située entre les deux moteurs électriques les plus éloignés de la boîte à engrenages 202.

Dans l'agencement de la Fig. 3, les moteurs électriques 203 sont disposés en ligne. Un agencement différent où les moteurs électriques 203 sont disposés de part et d'autre d'un plan vertical passant par l'axe 206 de rotation de l'arbre commun d'entrée 224 peut être réalisé, de sorte qu'il existe un angle non nul entre les arbres de sortie 228 d'un premier ensemble de moteurs électriques 203 et un second ensemble de moteurs électriques 203. Préférentiellement, les moteurs électriques 203 sont successivement de part et d'autre dudit plan vertical, comme schématiquement illustré sur la Fig. 4. En fonction du dimensionnement des moteurs électriques 203, cela permet de réduire l'encombrement en longueur du système de propulsion à hélice 101. Cet agencement particulier s'applique aussi en variante de l'agencement de la Fig. 2 (arbres de sortie 228 des moteurs électriques 203 parallèles à l'arbre commun d'entrée 224).

Dans un mode de réalisation particulier, le système de propulsion à hélice 101 comporte un boîtier 401 incluant un mécanisme de contrôle d'orientation (« pitch control » en anglais) des pales de l'hélice 201. Préférentiellement, le boîtier 401 est placé dans la continuité de l'arbre de sortie 221, de l'autre côté de la boîte à engrenages 202 par rapport à l'hélice 201. Si ce placement du boîter 401 est rendu impossible du fait de l'agencement du tout premier moteur électrique 203 derrière la boîte à engrenages 202, alors le boîter 401 est placé de sorte à minimiser au possible le décalage entre le boîter 401 et l'axe 205 de rotation de l'hélice 201.

## Revendications

1. Un système de propulsion à hélice (101) pour aéronef (100) comportant :
- une hélice (201) ;
- une pluralité de moteurs électriques (203) comportant chacun un arbre de sortie (228) ;
- une boîte à engrenages (202) ayant un arbre de sortie (221) sur lequel est mécaniquement couplée l'hélice (201) et ayant un arbre d'entrée (224) sur lequel est mécaniquement couplée la pluralité de moteurs électriques (203), l'arbre d'entrée (224) étant excentré par rapport à l'arbre de sortie (221) ;
et dans lequel tous les moteurs électriques (203) sont couplés mécaniquement à la suite les uns des autres le long de l'arbre d'entrée (224) de telle façon que les moteurs électriques (203) sont intégralement installés dans un espace, de l'autre côté de la boîte à engrenages (202) par rapport à l'hélice (201), laissé libre par l'excentrage entre l'arbre d'entrée (224) et l'arbre de sortie (221), les moteurs électriques (203) étant en outre disposés de sorte que :
- leurs arbres de sortie (228) sont parallèles à l'arbre d'entrée (224), chaque arbre de sortie (228) comportant un premier engrenage (227) couplé mécaniquement à un deuxième engrenage (226) sur l'arbre d'entrée (224), le premier engrenage (227) et le deuxième engrenage (226) étant dans un même plan ; ou
- leurs arbres de sortie (228) sont perpendiculaires à l'arbre d'entrée (224), chaque arbre de sortie (228) comportant un premier engrenage conique (305) couplé mécaniquement à un deuxième engrenage conique (304) sur l'arbre d'entrée (224), le premier engrenage conique (305) et le deuxième engrenage conique (304) étant ainsi dans des plans respectifs perpendiculaires.

2. Le système de propulsion à hélice selon la revendication 1, dans lequel les moteurs électriques (203) sont disposés en ligne.

3. Le système de propulsion à hélice selon l'une quelconque des revendications 1 et 2, dans lequel les moteurs électriques (203) sont disposés de part et d'autre d'un plan vertical passant par l'axe de rotation (206) de l'arbre d'entrée (224).

4. Le système de propulsion à hélice (101) selon l'une quelconque des revendications 1 à 3, dans lequel les moteurs électriques (203) sont couplés mécaniquement en roue libre avec l'arbre d'entrée (224).

5. Le système de propulsion à hélice (101) selon l'une quelconque des revendications 1 à 4, dans lequel l'arbre d'entrée (224) est couplé mécaniquement en roue libre avec l'arbre de sortie (221).

6. Le système de propulsion à hélice (101) selon l'une quelconque des revendications 1 à 5, comportant en outre un boîtier incluant un mécanisme de contrôle d'orientation des pales de l'hélice (401) placé dans la continuité de l'arbre de sortie (221), de l'autre côté de la boîte à engrenages (202) par rapport à l'hélice (201).

7. Le système de propulsion à hélice (101) selon l'une quelconque des revendications 1 à 5, dans lequel les moteurs électriques (203) sont alimentés par des piles à combustible.

8. Un aéronef (100) comportant au moins un système de propulsion à hélice (101) selon l'une quelconque des revendications 1 à 7.

## Patentansprüche

1. Propellerantriebssystem (101) für ein Luftfahrzeug (100), das Folgendes umfasst:
- einen Propeller (201);
- eine Vielzahl von Elektromotoren (203), die jeweils eine Abtriebswelle (228) umfassen;
- ein Getriebe (202), das eine Abtriebswelle (221) aufweist, mit der der Propeller (201) mechanisch gekoppelt ist, und eine Antriebswelle (224) aufweist, mit der die Vielzahl von Elektromotoren (203) mechanisch gekoppelt ist, wobei die Antriebswelle (224) mit Bezug auf die Abtriebswelle (221) exzentrisch versetzt ist;
und wobei alle Elektromotoren (203) entlang der Antriebswelle (224) aufeinanderfolgend mechanisch gekoppelt sind, sodass die Elektromotoren (203) auf der mit Bezug auf den Propeller (201) anderen Seite des Getriebes (202) vollständig in einem Raum installiert sind, der durch den exzentrischen Versatz zwischen der Antriebswelle (224) und der Abtriebswelle (221) freigelassen wird, wobei die Elektromotoren (203) ferner so angeordnet sind, dass:
- ihre Abtriebswellen (228) parallel zu der Antriebswelle (224) sind, wobei jede Abtriebswelle (228) ein erstes Zahnrad (227) umfasst, das mit einem zweiten Zahnrad (226) auf der Antriebswelle (224) mechanisch gekoppelt ist, wobei sich das erste Zahnrad (227) und das zweite Zahnrad (226) in einer gleichen Ebene befinden; oder
- ihre Abtriebswellen (228) senkrecht zu der Antriebswelle (224) sind, wobei jede Abtriebswelle (228) ein erstes Kegelzahnrad (305) umfasst, das mit einem zweiten Kegelzahnrad (304) auf der Antriebswelle (224) mechanisch gekoppelt ist, wobei sich das erste Kegelzahnrad (305) und das zweite Kegelzahnrad (304) somit in jeweiligen zueinander senkrechten Ebenen befinden.

2. Propellerantriebssystem nach Anspruch 1, wobei die Elektromotoren (203) in Reihe angeordnet sind.

3. Propellerantriebssystem nach einem beliebigen der Ansprüche 1 und 2, wobei die Elektromotoren (203) zu beiden Seiten einer vertikalen Ebene angeordnet sind, die durch die Drehachse (206) der Antriebswelle (224) verläuft.

4. Propellerantriebssystem (101) nach einem beliebigen der Ansprüche 1 bis 3, wobei die Elektromotoren (203) mit der Antriebswelle (224) freilaufend mechanisch gekoppelt sind.

5. Propellerantriebssystem (101) nach einem beliebigen der Ansprüche 1 bis 4, wobei die Antriebswelle (224) mit der Abtriebswelle (221) freilaufend mechanisch gekoppelt ist.

6. Propellerantriebssystem (101) nach einem beliebigen der Ansprüche 1 bis 5, das ferner ein Gehäuse umfasst, das einen Mechanismus zur Steuerung der Ausrichtung der Blätter des Propellers (401) umfasst und das in der Verlängerung der Abtriebswelle (221) auf der mit Bezug auf den Propeller (201) anderen Seite des Getriebes (202) platziert ist.

7. Propellerantriebssystem (101) nach einem beliebigen der Ansprüche 1 bis 5, wobei die Elektromotoren (203) durch Brennstoffzellen versorgt werden.

8. Luftfahrzeug (100), das mindestens ein Propellerantriebssystem (101) nach einem beliebigen der Ansprüche 1 bis 7 umfasst.

## Claims

1. A propeller-type propulsion system (101) for aircraft, having:
- a propeller;
- a plurality of electric motors (203), each comprising an output shaft (228);
- a gearbox (202) having an output shaft (221) onto which the propeller (201) is mechanically coupled, and having an input shaft (224) onto which the plurality of electric motors (203) is mechanically coupled, the input shaft (224) being off-centre with respect to the output shaft (221);
and in which all of the electric motors (203) are mechanically coupled one after the other along the input shaft (224) in such a way that the electric motors (203) are entirely installed in a space, on the opposite side of the gearbox (202) from the propeller (201), that is left free owing to the input shaft (224) and the output shaft (221) being off-centre with respect to one another, the electric motors (203) being moreover arranged in such a way that:
- their output shafts (228) are parallel to the input shaft (224), each output shaft (228) comprising a first gearwheel (227) mechanically coupled to a second gearwheel (226) on the input shaft (224), the first gearwheel (227) and the second gearwheel (226) being coplanar, or
- their output shafts (228) are perpendicular to the input shaft (224), each output shaft (228) comprising a first conical gearwheel (305) mechanically coupled to a second conical gearwheel (304) on the input shaft (224), the first conical gearwheel (305) and the second conical gearwheel (304) therefore being in perpendicular respective planes.

2. The propeller-type propulsion system according to Claim 1, wherein the electric motors (203) are arranged in a line.

3. The propeller-type propulsion system according to any one of claims 1 and 2, wherein the electric motors (203) are arranged on either side of a vertical plane passing through the axis of rotation (206) of the input shaft (224).

4. The propeller-type propulsion system (101) according to any one of claims 1 to 3, wherein the electric motors (203) are mechanically coupled in a freewheel arrangement with the input shaft (224).

5. The propeller-type propulsion system (101) according to any one of claims 1 to 4, wherein the input shaft (224) is mechanically coupled in a freewheel arrangement with the output shaft (221).

6. The propeller-type propulsion system (101) according to any one of claims 1 to 5, further comprising a housing for controlling the orientation of the propeller blades (401), this housing being placed in continuation of the output shaft (221), on the opposite side of the gearbox (202) from the propeller (201).

7. The propeller-type propulsion system (101) according to any one of claims 1 to 5, wherein the electric motors (203) are powered by fuel cells.

8. An aircraft (100) comprising at least one propeller-type propulsion system (101) according to any one of Claims 1 to 7.
